# EUROPEAN PATENT SPECIFICATION

(11) **EP 4 322 603 B1**
(45) Date of publication and mention of the grant of the patent: **28.10.2026**
(21) Application number: 23180984.9
(22) Date of filing: 11.03.2019
(51) Int. Cl.: H04W 24/10, H04W 72/52, H04L 43/065, H04L 43/067, H04L 67/12, H04W 4/70

(54) **COMMUNICATION METHOD AND APPARATUS**
KOMMUNIKATIONSVERFAHREN UND - VORRICHTUNG
PROCÉDÉ ET APPAREIL DE COMMUNICATION

(30) Priority: 12.03.2018 CN 201810200890
(43) Date of publication of application: 14.02.2024
(62) Document number(s) of the earlier application(s) in accordance with Art. 76 EPC: 19766491.5 / 3 755 030
(73) Proprietor: Huawei Cloud Computing Technologies Co., Ltd., Guizhou 550025 (CN)
(72) Inventor: CHANG, Hongna, Shenzhen (CN); ZHOU, Kai, Shenzhen (CN)
(74) Representative: Grünecker Patent- und Rechtsanwälte PartG mbB

(56) References cited:
- EP-A1- 2 192 807
- WO-A1-2013/165284
- WO-A1-2015/070903
- US-A1- 2011 201 267

## Description

### TECHNICAL FIELD

Embodiments of this application relate to the field of communications technologies, and in particular, to a communication method and an Internet of things platform.

### BACKGROUND

A Narrow Band Internet of things (NB-IoT) is a wide area network with low power consumption and limited bandwidth, and a quantity of NB-IoT terminals connected at a same time is also limited. With intelligent evolution of vertical industries, the quantity of NB-IoT terminals is increasing. NB-IoT chips/modules are deployed for street lamps, gas meters, water meters, shared bicycles, manhole covers, and the like, to implement a function of the NB-IoT terminal. These NB-IoT terminals may report data to an Internet of things platform by using the NB-IoT at a same time, for example, all gas meters in a same community may perform reporting at a same time, or when a gas meter is reporting a message, street lamps register with a network together, thereby causing network congestion. US 2011/201267 Al relates to a method in a server for scheduling of an information transmission from an information-providing device to a subscriber equipment in a communication system. WO 2013/165284 Al relates to the field of wireless communication systems, and in particular uploading and downloading of data within such wireless communication systems in a postponed manner.

To prevent a large quantity of NB-IoT terminals (in a same industry or across industries) from accessing an NB-IoT network at a same time, in the prior art, a reporting start time (Schedule Start Time), a random reporting window (Randomised Delivery Window), a reporting frequency, and the like are set for each terminal. After the reporting start time, the terminal reports data to the Internet of things platform at any time point within a time range of the specified random reporting window. In addition, a different reporting start time and a different random reporting window may be set for each terminal, so that uplink messages reported by the terminals can be discrete.

However, in the prior art, each terminal may perform reporting at any time in a random reporting time window. Therefore, a plurality of terminals may perform reporting at a same time, thereby causing network congestion and a reporting failure.

### SUMMARY

Embodiments of this application provide a communication method and a Internet of things platform, to avoid network congestion caused by data reporting of a terminal, and improve a success rate of the data reporting of the terminal. The present invention is defined according to the independent claims. The dependent claims recite advantageous embodiments of the invention.

According to a first aspect, an embodiment of this application provides a communication method. The method includes: obtaining, by an Internet of things platform, historical load of a serving cell of a terminal; obtaining, by the Internet of things platform based on a service type of the terminal, a time range in which the terminal can report data;; determining, by the Internet of things platform, a data reporting time of the terminal based on the historical load of the serving cell and the time range in which the terminal can report data; and sending, by the Internet of things platform to the terminal, the data reporting time.

In a possible design, the determining a data reporting time of the terminal based on the historical load of the serving cell includes: determining, by the Internet of things platform, predicted load of the serving cell in a preset time period from a current time based on the historical load of the serving cell; and then, determining the data reporting time of the terminal based on the predicted load of the serving cell in the preset time period from the current time.

In a possible design, the obtaining, by an Internet of things platform, historical load of a serving cell of a terminal includes: obtaining, by the Internet of things platform, historical load of at least one cell, where the at least one cell includes the serving cell of the terminal; and then, obtaining the historical load of the serving cell from the historical load of the at least one cell based on the serving cell of the terminal.

In a possible design, the obtaining, by the Internet of things platform, historical load of at least one cell includes: obtaining, by the Internet of things platform, the historical load of the at least one cell from a network management device.

In a possible design, the obtaining, by the Internet of things platform, historical load of at least one cell includes: alternatively, obtaining, by the Internet of things platform, the historical load of the at least one cell from a base station, where the base station is a serving base station of the terminal, and the at least one cell is a cell within coverage of the base station.

In a possible design, the obtaining, by the Internet of things platform, historical load of at least one cell includes: obtaining, by the Internet of things platform, the historical load of the at least one cell from a Service Capability Exposure Function (SCEF).

In a possible design, the obtaining, by the Internet of things platform, the historical load of the at least one cell from an SCEF includes: sending, by the Internet of things platform, a first message to the SCEF, where the first message includes information used to request the historical load, identification information of the at least one cell, and/or identification information of a base station; and then, receiving the identification information of the at least one cell that is sent by the SCEF, where the base station is a serving base station of the terminal, and the at least one cell is a cell within coverage of the base station.

In a possible design, the Internet of things platform further obtains a time range in which the terminal can report data.

The determining, by the Internet of things platform, a data reporting time of the terminal based on the historical load of the serving cell includes: determining, by the Internet of things platform, the data reporting time of the terminal based on the historical load of the serving cell and the time range in which data can be reported.

In a possible design, the obtaining, by the Internet of things platform, a time range in which the terminal can report data includes: receiving, by the Internet of things platform, the time range that is sent by the terminal and in which data can be reported.

In a possible design, before receiving the time range that is sent by the terminal and in which data can be reported, the Internet of things platform further sends first information to the terminal, where the first information is used to request the time range in which data can be reported.

In a possible design, the obtaining, by the Internet of things platform, a time range in which the terminal can report data includes: receiving, by the Internet of things platform, a time range that is sent by an application server and corresponds to a service type of the terminal and in which data can be reported.

In a possible design, the Internet of things platform further receives second information sent by the application server, where the second information is used to indicate a service type provided by the application server, and the service type provided by the application server is the same as the service type of the terminal. Then, the Internet of things platform determines at least one time range based on the service type provided by the application server and the historical load of the at least one cell, and further sends the at least one time range to the application server, where the at least one time range is used by the application server to determine, based on the at least one time range, the time range that corresponds to the service type of the terminal and in which data can be reported.

In a possible design, the Internet of things platform further receives information that is about the serving cell of the terminal and that is sent by the terminal.

In a possible design, the Internet of things platform further sends information used to request to obtain the serving cell of the terminal to the terminal.

In a possible design, the Internet of things platform further receives a reporting type of the terminal that is sent by the terminal, where the reporting type is used to indicate that a data reporting type of the terminal is periodic reporting or event-triggered reporting.

In a possible design, the Internet of things platform further sends information used to request the reporting type of the terminal to the terminal.

In a possible design, if the reporting type of the terminal is event-triggered reporting, before determining the data reporting time of the terminal based on the historical load of the serving cell of the terminal, the Internet of things platform further receives a second message sent by the application server, where the second message includes information used to request data reported by the terminal.

In a possible design, the determining a data reporting time of the terminal based on the historical load of the serving cell includes: after detecting that the terminal is connected to the Internet of things platform, determining, by the Internet of things platform, the data reporting time of the terminal based on the historical load of the serving cell.

In a possible design, after determining the data reporting time of the terminal, the Internet of things platform further receives a third message sent by the terminal, where the third message includes information used to indicate that the serving cell of the terminal changes and information about a changed serving cell; and then, updates the data reporting time of the terminal based on historical load of the changed serving cell.

In a possible design, after determining the data reporting time of the terminal, the Internet of things platform further receives a fourth message sent by the application server or the terminal, where the fourth message includes information used to indicate that the time range in which the terminal can report data changes and a changed time range in which data can be reported; and then, updates the data reporting time of the terminal based on the historical load of the serving cell and the changed time range in which data can be reported.

In a possible design, after determining the data reporting time of the terminal, the Internet of things platform further receives a fifth message sent by the application server, where the fifth message includes information used to request to change the data reporting time of the terminal; and then, updates the data reporting time of the terminal based on the historical load of the serving cell.

In a possible design, before the Internet of things platform performs the method according to any one of the foregoing possible designs, the Internet of things platform determines that the terminal supports data reporting performed at a data reporting time that is set by the Internet of things platform.

In a possible design, before determining that the terminal supports data reporting performed at the data reporting time that is set by the Internet of things platform, the Internet of things platform further receives third information sent by the terminal, where the third information is used to indicate that the terminal can report data at the data reporting time that is set by the Internet of things platform.

According to a second aspect, an embodiment of this application provides Internet of things platform, comprising:
a receiving module, configured to obtain historical load of a serving cell of a terminal;
a processing module, configured to determine a data reporting time of the terminal based on the historical load of the serving cell; and
a sending module, configured to send the data reporting time to the terminal.

In a possible design, the processing module is specifically configured to:
determine predicted load of the serving cell in a preset time period from a current time based on the historical load of the serving cell; and
determine the data reporting time of the terminal based on the predicted load of the serving cell in the preset time period from the current time.

In a possible design, the receiving module is specifically configured to:
obtain historical load of at least one cell, where the at least one cell includes the serving cell of the terminal; and
obtain the historical load of the serving cell from the historical load of the at least one cell based on the serving cell of the terminal.

In a possible design, the receiving module is specifically configured to obtain the historical load of the at least one cell from a network management device.

In a possible design, the receiving module is specifically configured to obtain the historical load of the at least one cell from a base station, where the base station is a serving base station of the terminal, and the at least one cell is a cell within coverage of the base station.

In a possible design, the receiving module is specifically configured to obtain the historical load of the at least one cell from an SCEF.

In a possible design, the sending module is further configured to send a first message to the SCEF before the receiving module receives identification information that is of the at least one cell and that is sent by the SCEF, where the first message includes information used to request the historical load, the identification information of the at least one cell, and/or identification information of a base station, where
the base station is a serving base station of the terminal, and the at least one cell is a cell within coverage of the base station.

In a possible design, the receiving module is further configured to obtain a time range in which the terminal can report data. The processing module is specifically configured to determine the data reporting time of the terminal based on the historical load of the serving cell and the time range in which data can be reported.

In a possible design, the receiving module is specifically configured to receive the time range that is sent by the terminal and in which data can be reported.

In a possible design, the sending module is further configured to send first information to the terminal, where the first information is used to request the time range in which data can be reported.

In a possible design, the receiving module is specifically configured to: receive a time range that is sent by an application server and corresponds to a service type of the terminal and in which data can be reported, and determine, as the time range in which the terminal can report data, the time range that corresponds to the service type of the terminal and in which data can be reported.

In a possible design, the receiving module is further configured to receive second information sent by the application server, where the second information is used to indicate a service type provided by the application server, and the service type provided by the application server is the same as the service type of the terminal. The processing module is further configured to determine at least one time range based on the service type provided by the application server and the historical load of the at least one cell. The sending module is further configured to send the at least one time range to the application server, where the at least one time range is used by the application server to determine, based on the at least one time range, the time range that corresponds to the service type of the terminal and in which data can be reported.

In a possible design, the receiving module is further configured to receive information that is about the serving cell of the terminal and that is sent by the terminal.

In a possible design, the sending module is further configured to send information used to request to obtain the serving cell of the terminal to the terminal.

In a possible design, the receiving module is further configured to receive a reporting type of the terminal that is sent by the terminal, where the reporting type is used to indicate that a data reporting type of the terminal is periodic reporting or event-triggered reporting.

In a possible design, the sending module is further configured to send information used to request the reporting type of the terminal to the terminal.

In a possible design, if the reporting type of the terminal is event-triggered reporting, the receiving module is further configured to receive a second message sent by the application server, where the second message includes information used to request data reported by the terminal.

In a possible design, the processing module is specifically configured to: after detecting that the terminal is connected to the Internet of things platform, determine the data reporting time of the terminal based on the historical load of the serving cell.

In a possible design, the receiving module is further configured to: after the processing module determines the data reporting time of the terminal, receive a third message sent by the terminal, where the third message includes information used to indicate that the serving cell of the terminal changes and information about a changed serving cell.

The processing module is further configured to update the data reporting time of the terminal based on historical load of the changed serving cell.

In a possible design, the receiving module is further configured to: after the processing module determines the data reporting time of the terminal, receive a fourth message sent by the application server, where the fourth message includes information used to indicate that the time range in which the terminal can report data changes and a changed time range in which data can be reported.

The processing module is further configured to update the data reporting time of the terminal based on the historical load of the serving cell and the changed time range in which data can be reported.

In a possible design, the receiving module is further configured to: after the processing module determines the data reporting time of the terminal, receive a fifth message sent by the application server, where the fifth message includes information used to instruct to change the data reporting time of the terminal.

The processing module is further configured to update the data reporting time of the terminal based on the historical load of the serving cell.

In a possible design, the processing module is further configured to: before the Internet of things platform executes the solution according to any one of the embodiments of this application in the second aspect, determine that the terminal supports data reporting performed at a data reporting time that is set by the Internet of things platform.

In a possible design, the receiving module is further configured to: before the processing module determines that the terminal supports data reporting performed at the data reporting time that is set by the Internet of things platform, receive third information sent by the terminal, where the third information is used to indicate that the terminal can report data at the data reporting time that is set by the Internet of things platform.

In conclusion, the Internet of things platform determines the data reporting time of the terminal based on the historical load of the serving cell, and sends the data reporting time to the terminal, and the terminal reports data to the Internet of things platform based on the data reporting time received from the Internet of things platform. In the embodiments, the data reporting time of the terminal is determined based on the historical load of the serving cell. Therefore, the determined data reporting time may be, for example, a time at which the load of the serving cell is the lowest. Therefore, the terminal may report data at staggered times, so that a large quantity of terminals can be prevented from performing reporting at a same time, network congestion is avoided, and a network use rate and a success rate of data reporting are improved.

### BRIEF DESCRIPTION OF DRAWINGS

FIG. 1 is a schematic diagram of a communications system according to an example;
FIG. 2 is a flowchart of a communication method according to an example;
FIG. 3 is a schematic diagram of obtaining historical load of at least one cell by an Internet of things platform according to an example;
FIG. 4 is a schematic diagram of obtaining historical load of at least one cell by an Internet of things platform according to another example;
FIG. 5 is a schematic diagram of obtaining historical load of at least one cell by an Internet of things platform according to another example;
FIG. 6 is a flowchart of a communication method according to another embodiment of this application;
FIG. 7 is a schematic diagram of obtaining, by an Internet of things platform, a time range in which data can be reported according to an example;
FIG. 8 is a schematic diagram of obtaining, by an Internet of things platform, a time range in which data can be reported according to another example;
FIG. 9 is a schematic diagram of application to periodic reporting according to an example;
FIG. 10 is a schematic diagram of application to event-triggered reporting according to an example;
FIG. 11 is a schematic diagram of updating a data reporting time by an Internet of things platform according to an example;
FIG. 12 is a schematic diagram of updating a data reporting time by an Internet of things platform according to another example;
FIG. 13 is a schematic diagram of updating a data reporting time by an Internet of things platform according to another example;
FIG. 14 is a schematic structural diagram of a communications device according to an example;
FIG. 15 is a schematic structural diagram of a communications apparatus according to an example;
FIG. 16 is a schematic structural diagram of a communications apparatusaccording to an example ; and
FIG. 17 is a schematic structural diagram of a communications apparatusaccording to an example .

### DESCRIPTION OF EMBODIMENTS

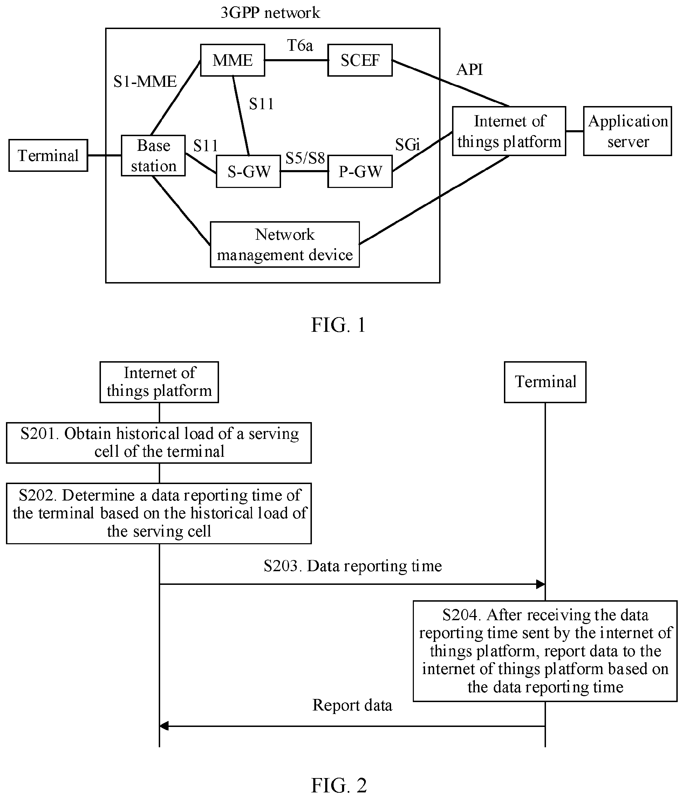

FIG. 1 is a schematic diagram of a communications system according to an example not being part of the present invention but useful for understanding the present invention. As shown in FIG. 1, a terminal may report data to an Internet of things platform by using a 3GPP network, and the Internet of things platform may transmit, to an application server, data reported by at least one terminal. The Internet of things platform and the application server may be connected by using the Internet. The terminal may communicate with the Internet of things platform by using, for example, an LwM2M protocol, but this example is not limited thereto.

An SCEF is configured to connect the 3GPP network to the Internet of things platform, and provides an interface for interaction between the 3GPP network and the Internet of things platform, and exposes some capabilities in the 3GPP network to the Internet of things platform, so that the Internet of things platform can obtain location information of the terminal (including information about a serving cell of the terminal and the like) and network status information from the 3GPP network.

The Internet of things platform is configured to manage terminals. These terminals may be connected to the Internet of things platform by using the 3GPP network. The Internet of things platform may perform registration, authentication, and uplink and downlink message traffic management and the like on the terminals.

A base station shown in FIG. 1 is also referred to as a radio access network (Radio Access Network, RAN) device, and is a device that connects the terminal to a radio network. The base station may be an evolved NodeB (eNB or eNodeB) in Long Term Evolution (LTE), a relay station or an access point, or a base station in a 5G network, such as a Transmission and Reception Point (TRP) or a controller. This is not limited herein.

The terminal shown in FIG. 1 may be a wireless terminal or a wired terminal. The wireless terminal may be a device with a wireless receiving/transmitting function, and may be deployed on land including indoor or outdoor, handheld, or in-vehicle; or may be deployed on a water surface (for example, on a ship); or may be deployed in the air (for example, on an airplane, a balloon, and a satellite). The terminal device may be a mobile phone, a tablet computer (Pad), a computer with a wireless receiving/transmitting function, a virtual reality (VR) terminal, an augmented reality (AR) terminal, a wireless terminal in industrial control, a wireless terminal in self-driving, a wireless terminal in remote medical, a wireless terminal in a smart grid, a wireless terminal in transportation safety, a wireless terminal in a smart city, a wireless terminal in a smart home, or the like. This is not limited herein.

FIG. 2 is a flowchart of a communication method according to an example not being part of the present invention but useful for understanding the present invention. As shown in FIG. 2, the method in this embodiment may include the following steps.

S201. An Internet of things platform obtains historical load of a serving cell of a terminal.

In this example, the Internet of things platform may obtain the historical load of the serving cell of the terminal. The historical load of the serving cell may be historical load in a period of time before a current time. A size of the period of time may be, for example, preset. For example, historical load in each minute in the period of time before the current time may be obtained. The serving cell of the terminal is a serving cell in which the terminal is located, or a serving cell to which the terminal belongs.

S202. The Internet of things platform determines a data reporting time of the terminal based on the historical load of the serving cell.

In this example, after obtaining the historical load of the serving cell of the terminal, the Internet of things platform determines the data reporting time of the terminal based on the historical load of the serving cell. In some examples, the Internet of things platform determines, based on the historical load of the serving cell, that a time at which load of the serving cell is relatively small is the data reporting time of the terminal. For example, the Internet of things platform may determine that a time at which the load of the serving cell is the lowest is the data reporting time of the terminal.

S203. The Internet of things platform sends the data reporting time to the terminal.

In this example, the Internet of things platform sends the data reporting time that is of the terminal and that is determined in S202 to the terminal.

S204. After receiving the data reporting time sent by the Internet of things platform, the terminal reports data to the Internet of things platform based on the data reporting time.

In this example, the terminal receives the data reporting time sent by the Internet of things platform, and then reports the data to the Internet of things platform based on the data reporting time. For example, the terminal reports the data to the Internet of things platform when the data reporting time arrives.

In this example, the Internet of things platform determines the data reporting time of the terminal based on the historical load of the serving cell, and sends the data reporting time to the terminal, and the terminal reports the data to the Internet of things platform based on the data reporting time received from the Internet of things platform. In this example, the data reporting time of the terminal is determined based on the historical load of the serving cell. Therefore, the determined data reporting time may be, for example, the time at which the load of the serving cell is the lowest. Therefore, the terminal may report data at staggered times, so that a large quantity of terminals can be prevented from performing reporting at a same time, network congestion is avoided, and a network use rate and a success rate of data reporting are improved.

In some examples, a possible implementation of S202 includes: The Internet of things platform determines predicted load of the serving cell in a preset period of time from the current time based on the historical load of the serving cell, and then determines the data reporting time of the terminal based on the predicted load of the serving cell in the preset period of time from the current time. In this example, after obtaining the historical load of the serving cell, the Internet of things platform determines the predicted load of the serving cell in the preset period of time from the current time based on the historical load of the serving cell. For example, predicted load of the serving cell in each minute within two days from the current time may be determined. Then, the Internet of things platform determines the data reporting time of the terminal based on the obtained predicted load. For example, the data reporting time may be a time at which the predicted load is the lowest.

In some examples, a possible implementation of the obtaining, by an Internet of things platform, historical load of a serving cell includes: The platform obtains historical load of at least one cell, where the at least one cell includes the serving cell of the terminal; and then the Internet of things platform obtains the historical load of the serving cell from the historical load of the at least one cell based on the serving cell of the terminal. Optionally, the Internet of things platform may further receive information that is about the serving cell of the terminal and that is sent by the terminal, so that the Internet of things platform may determine the serving cell of the terminal.

The following describes an implementation in which the Internet of things platform obtains the historical load of the at least one cell, but this example is not limited thereto.

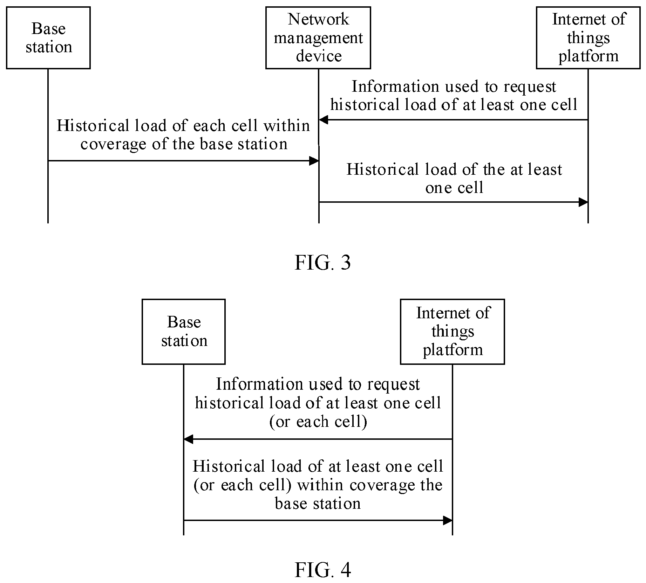

In a possible implementation, the Internet of things platform obtains the historical load of the at least one cell from a network management device. For example, as shown in FIG. 3, an interface is newly added between the Internet of things platform and the network management device. The Internet of things platform may send, to the network management device by using the newly added interface, information used to request the historical load of the at least one cell (for example, the Internet of things platform may request historical load of each cell managed by the network management device, or may request information about historical load of at least one specified cell, or may request information about historical load of each cell covered by a specified base station). In addition, the base station may periodically report historical load of each cell within coverage of the base station to the network management device. Therefore, after the network management device receives the information that is sent by the Internet of things platform and that is used to request the historical load of the at least one cell, the network management device sends, to the Internet of things platform by using the newly added interface, the historical load of the at least one cell that is received from the base station.

In another possible implementation, the Internet of things platform obtains the historical load of the at least one cell from the base station, and the at least one cell is a cell within coverage of the base station. For example, as shown in FIG. 4, an interface is newly added between the Internet of things platform and the base station. The Internet of things platform may send, to the base station by using the newly added interface, information used to request the historical load of the at least one cell (for example, the Internet of things platform may request historical load of each cell within coverage of the base station, or may request historical load of at least one specified cell within coverage of the base station). Then, the base station reports the historical load of each cell (or the at least one specified cell) within coverage of the base station to the Internet of things platform by using the newly added interface.

In another possible implementation, that the Internet of things platform obtains the historical load of the at least one cell from an SCEF may be: The Internet of things platform sends a first message to the SCEF, where the first message includes information used to request the historical load, identification information of the at least one cell, and/or identification information of the base station, in other words, the first message includes the information used to request the historical load and the identification information of the at least one cell, or the first message includes the information used to request the historical load and the identification information of the base station, or the first message includes the information used to request the historical load, the identification information of the at least one cell, and the identification information of the base station, the base station is a serving base station of the terminal, and the at least one cell is a cell within coverage of the base station; and then, the SCEF sends the historical load of the at least one cell to the Internet of things platform. Optionally, the information used to request the historical load may be a message type in the first message. In this example, the first message may request the historical load by using the message type, to reduce a size of the first message.

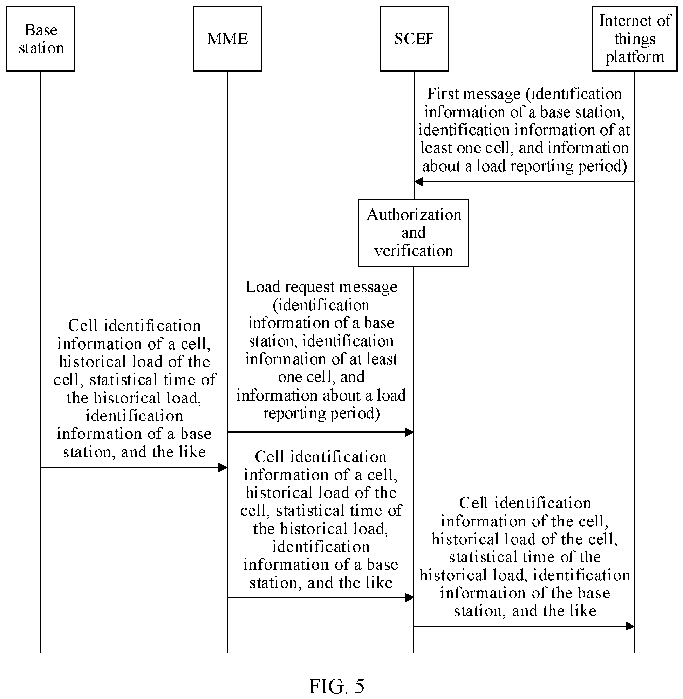

For example, as shown in FIG. 5, an interface is newly added between the Internet of things platform and the SCEF. The Internet of things platform may send the first message to the SCEF by using the newly added interface. The first message includes the information used to request the historical load. In addition, the first message may include identification information of the base station (used to indicate historical load of a cell within coverage of a specified base station) and/or identification information of the at least one cell (used to request historical load of at least one specified cell). Optionally, the first message may further include information about a load reporting period (if the historical load is periodically reported, the information needs to be included). After receiving the first message, the SCEF performs authorization and verification to verify whether the platform has a right to request the historical load. If it is verified that the platform has the right to request the historical load, the SCEF sends a load request message to an MME. The load request message includes the identification information of the base station and/or the identification information of the at least one cell. Optionally, the load request message may further include the information about the load reporting period. Then, the MME sends the load request message to the base station. After receiving the load request message sent by the MME, the base station may send the historical load of each cell of the base station or the historical load of the at least one cell to the MME, or the base station sends the historical load to the MME based on the load reporting period. Specifically, the base station may send identification information of a cell, historical load of the cell, a statistics collection time of the historical load, the identification information of the base station, and the like to the MME. Then, the MME forwards the identification information of the cell, the historical load of the cell, the statistics collection time of the historical load, the identification information of the base station, and the like to the SCEF, and the SCEF forwards the identification information of the cell, the historical load of the cell, the statistics collection time of the historical load, the identification information of the base station, and the like to the Internet of things platform.

Optionally, the historical load obtained by the Internet of things platform from the base station, the network management device, or the SCEF is the historical load in the period of time before the current time. A size of the period of time may be indicated by the Internet of things platform to the base station, the network management device, or the SCEF.

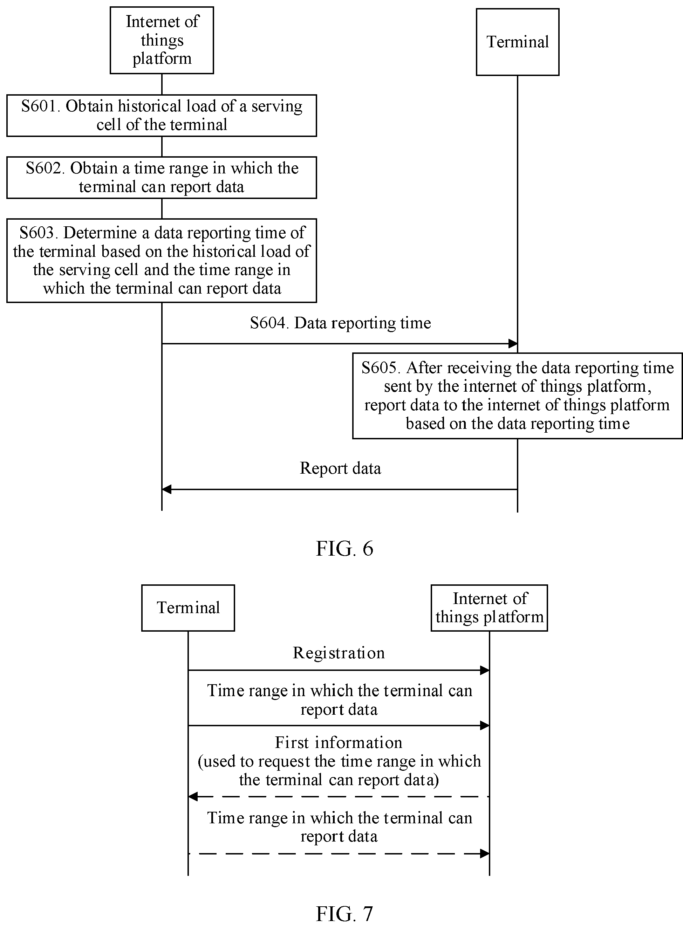

FIG. 6 is a flowchart of a communication method according to an embodiment of the present invention. As shown in FIG. 6, the method in this embodiment may include the following steps.

S601. An Internet of things platform obtains historical load of a serving cell of a terminal.

In this embodiment, for a specific implementation process of S601, refer to related descriptions in the embodiment shown in FIG. 2. Details are not described herein again.

S602. The Internet of things platform obtains a time range in which the terminal can report data.

In this embodiment, the Internet of things platform further obtains the time range in which the terminal can report data. The time range in which data can be reported is a time range in which the terminal can report data to the Internet of things platform, and indicates that the terminal reports data in this time range. For example, the first time is 9: 00 to 11: 00.

An execution sequence of S601 and S602 is not limited.

S603. The Internet of things platform determines a data reporting time of the terminal based on the historical load of the serving cell and the time range in which the terminal can report data.

In this embodiment, after obtaining the historical load of the serving cell of the terminal and the time range in which the terminal can report data, the Internet of things platform determines the data reporting time of the terminal based on the historical load of the serving cell and the time range in which the terminal can report data. In some embodiments, the Internet of things platform determines, based on the historical load of the serving cell, the data reporting time from the time range in which data can be reported. For example, a time at which load of the serving cell is the lowest is determined as the data reporting time from the time range in which data can be reported, and the data reporting time is, for example, a moment in the time range in which data can be reported, or the data reporting time of the terminal is, for example, partial time in the time range in which data can be reported.

In some embodiments, the Internet of things platform determines predicted load of the serving cell in a preset period of time from a current time based on the historical load of the serving cell, and then determines the data reporting time of the terminal based on the predicted load of the serving cell in the preset period of time from the current time and the time range in which data can be reported.

S604. The Internet of things platform sends the data reporting time to the terminal.

S605. After receiving the data reporting time sent by the Internet of things platform, the terminal reports data to the Internet of things platform based on the data reporting time.

In this embodiment, for a specific implementation process of S604 and S605, refer to related descriptions in the example shown in FIG. 2. Details are not described herein again.

In this embodiment, the Internet of things platform determines the data reporting time of the terminal based on the historical load of the serving cell and the time range in which the terminal can report data, and sends the data reporting time of the terminal to the terminal, and the terminal reports the data to the Internet of things platform based on the data reporting time received from the Internet of things platform. In this embodiment, the data reporting time of the terminal is determined based on the historical load of the serving cell and the time range in which the terminal can report data. Therefore, the determined data reporting time may be, for example, the time at which the load of the serving cell is the lowest in the time range in which data can be reported. Therefore, the terminal may report data at staggered times, so that a large quantity of terminals can be prevented from performing reporting at a same time, network congestion is avoided, and a network use rate and a success rate of data reporting are improved.

The following describes an implementation in which the Internet of things platform obtains the time range in which the terminal can report data in S602, but this embodiment is not limited thereto.

In a possible implementation, the Internet of things platform receives the time range that is sent by the terminal and in which the terminal can report data. The terminal may actively send, to the Internet of things platform, the time range in which the terminal can report data. For example, as shown in FIG. 7, when registering with the Internet of things platform or after registering with the Internet of things platform, the terminal sends, to the Internet of things platform by using another message, the time range in which the terminal can report data. It should be noted that, in FIG. 7, after registering with the Internet of things platform, the terminal actively sends, to the Internet of things platform, the time range in which the terminal can report data. In another example, the terminal may also add, to a registration message, the time range in which data can be reported, and send the registration message to the Internet of things platform. Alternatively, the Internet of things platform may first request to obtain, from the terminal, the time range in which the terminal can report data, and then the terminal sends, to the Internet of things platform, the time range in which the terminal can report data. For example, after the terminal registers with the Internet of things platform, the Internet of things platform sends first information to the terminal, where the first information is used to request the time range in which the terminal can report data; and after receiving the first information, the terminal sends, to the Internet of things platform, the time range in which the terminal can report data.

In another possible implementation, that the Internet of things platform receives a time range that is sent by an application server and in which the terminal can report data may be specifically: The Internet of things platform receives a time range that is sent by the application server and corresponds to a service type of the terminal and in which data can be reported, where the time range that corresponds to the service type of the terminal and in which data can be reported is the time range in which the terminal can report data. For example, the Internet of things platform receives a time range that is sent by the application server and corresponds to a first service type and in which data can be reported, and the Internet of things platform determines, based on a fact that the service type of the terminal is the first service type, that the time range that corresponds to the first service type and in which data can be reported is the time range in which the terminal can report data.

Optionally, the application server may further send second information to the Internet of things platform, where the second information is used to indicate a service type provided by the application server, and the service type of the terminal is the same as the service type provided by the application server. Because the second information indicates the service type provided by the application server, the Internet of things platform may determine that the time range that is received from the application server and in which data can be reported is the time range in which the terminal can report data. In some solutions, the application server may send, to the Internet of things platform by using a same message, the second information and the time range that corresponds to the service type of the terminal and in which data can be reported, or may send, to the Internet of things platform by using different messages, the second information and the time range that corresponds to the service type of the terminal and in which data can be reported.

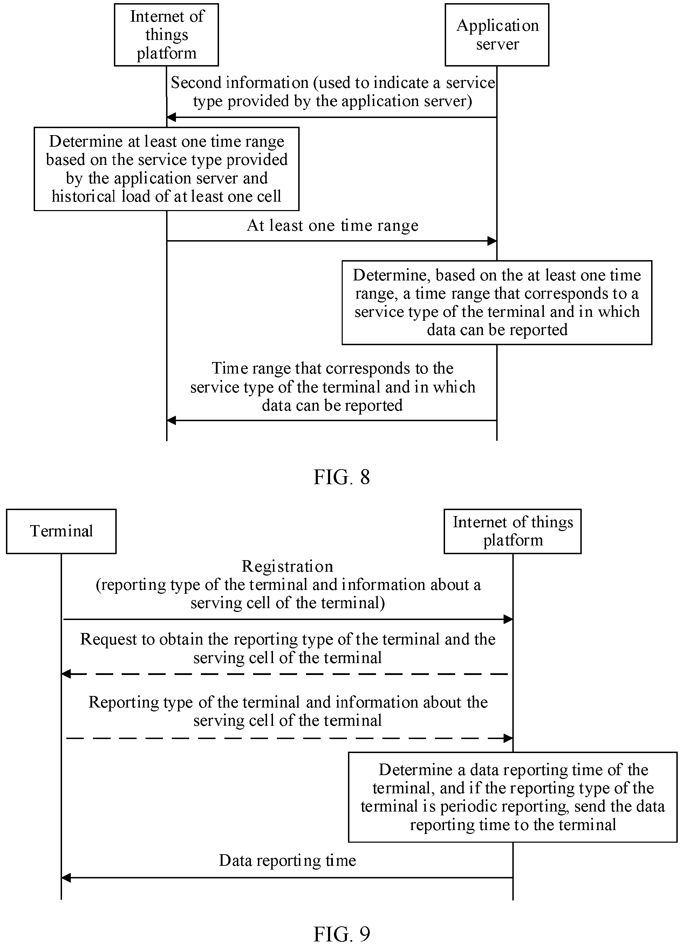

Optionally, before the application server sends, to the Internet of things platform, the time range that corresponds to the service type of the terminal and in which data can be reported, the application server may further send second information to the Internet of things platform, where the second information is used to indicate a service type provided by the application server, and the service type of the terminal is the same as the service type provided by the application server. After receiving the second information, the Internet of things platform determines at least one time range based on the service type provided by the application server and historical load of at least one cell, where the at least one time range may be, for example, a time range in which load is less than preset load. Then, the Internet of things platform sends the determined at least one time range to the application server. After receiving the at least one time range, the application server determines, from the at least one time range, the time range that corresponds to the service type of the terminal and in which data can be reported, and sends the time range to the Internet of things platform, for example, as shown in FIG. 8.

The foregoing service type indicates an industry to which the service belongs, for example, periodic reporting of a meter and the like, periodic registration of a street lamp, periodic data reporting of a shared bicycle, periodic data reporting of a smart home appliance, or event reporting of a smart home appliance.

Based on the foregoing embodiments, optionally, the terminal further sends information about the serving cell of the terminal to the Internet of things platform. Correspondingly, the Internet of things platform receives the information about the serving cell of the terminal. The terminal may actively send the information about the serving cell of the terminal to the Internet of things platform. For example, the terminal sends the information about the serving cell of the terminal to the Internet of things platform when registering with the Internet of things platform. Alternatively, the Internet of things platform may first request to obtain the information about the serving cell of the terminal from the terminal, and then the terminal sends the information about the serving cell of the terminal to the Internet of things platform. For example, after the terminal registers with the Internet of things platform, the Internet of things platform sends information used to request to obtain the serving cell of the terminal to the terminal, and after receiving the information used to request to obtain the serving cell of the terminal, the terminal sends the information about the serving cell of the terminal to the Internet of things platform. Optionally, the terminal may send, to the Internet of things platform by using a same message, the information about the serving cell of the terminal and the time range in which the terminal can report data. Optionally, the Internet of things platform may request, by using a same message, to obtain, from the terminal, the information about the serving cell of the terminal and the time range in which the terminal can report data.

Based on the foregoing embodiments, optionally, the terminal further sends a reporting type of the terminal to the Internet of things platform, where the reporting type is used to indicate that a data reporting type of the terminal is periodic reporting or event-triggered reporting. Correspondingly, the Internet of things platform receives the reporting type of the terminal. The terminal may actively send the reporting type of the terminal to the Internet of things platform. For example, the terminal sends the reporting type of the terminal to the Internet of things platform when registering with the Internet of things platform. Alternatively, the Internet of things platform may first request to obtain the reporting type of the terminal from the terminal, and then the terminal sends the reporting type of the terminal to the Internet of things platform. For example, after the terminal registers with the Internet of things platform, the Internet of things platform sends information used to request to obtain the reporting type of the terminal to the terminal, and after receiving the information used to request to obtain the reporting type of the terminal, the terminal sends information about the reporting type of the terminal to the Internet of things platform.

At least two of the time range in which the terminal can report data, the information about the serving cell of the terminal, and the reporting type of the terminal may be included in a same message and are sent by the terminal to the Internet of things platform, or may be separately included in different messages and are sent by the terminal to the Internet of things platform.

In some embodiments, the terminal may send the information about the serving cell of the terminal and the reporting type of the terminal to the Internet of things platform during registration, and the information may be included in, for example, a schedule object. After the terminal completes registration, the Internet of things platform requests the serving cell of the terminal and the reporting type of the terminal from the terminal, and then the terminal sends the information about the serving cell of the terminal and the reporting type of the terminal to the Internet of things platform.

If the reporting type of the terminal is periodic reporting, and the periodic reporting includes but is not limited to: if a terminal such as a gas meter or a water meter reports read data once a day, all street lamps are powered on at, for example, 6 p.m., and registration of a device is triggered after all the street lamps are powered on, the Internet of things platform determines the data reporting time of the terminal in the manners described in the foregoing embodiments, and sends the data reporting time to the terminal, for example, as shown in FIG. 9.

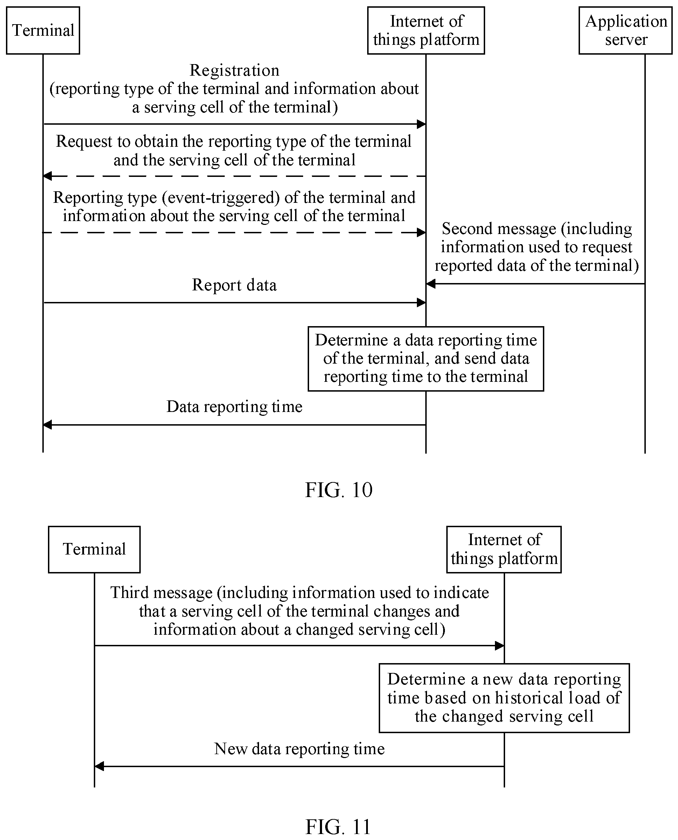

If the reporting type of the terminal is event-triggered reporting, for example, when a client needs to read data of a batch of terminals, a read command is delivered in advance, and the read command triggers the terminal to report data. In this case, the Internet of things platform first does not determine the data reporting time of the terminal, and then determines the data reporting time after waiting for event triggering. For example, when the Internet of things platform receives a second message sent by the application server, if the second message includes information used to request data reported by the terminal, it indicates that event triggering occurs and then the data reporting time of the terminal can be determined. Optionally, the second message may further include identification information of a cell or identification information of a group. If the second message includes the identification information of the cell, it indicates that the second message requests the serving cell to report data for a terminal in the cell. If the second message includes the identification information of the group, it indicates that the second message requests data reported by a terminal in the group. In some embodiments, after detecting that the terminal is connected to the Internet of things platform, the Internet of things platform determines the data reporting time of the terminal in the manners described in the foregoing embodiments, and sends the data reporting time to the terminal. For example, the Internet of things platform may add the data reporting time to a response message and send the response message to the terminal. That the Internet of things platform detects that the terminal is connected to the Internet of things platform may be: When the Internet of things platform receives data reported by the terminal, the Internet of things platform detects that the terminal is connected to the Internet of things platform, for example, as shown in FIG. 10.

In some embodiments, the terminal further sends a quantity of reporting times to the Internet of things platform, where the quantity of reporting times may be N, and N may be equal to 1 or may be an integer greater than 1. The quantity of reporting times may be included in a same message (for example, included in a schedule object) with the foregoing information about the serving cell of the terminal and the foregoing reporting period of the terminal, and may be sent by the terminal to the Internet of things platform, or may be sent by the terminal to the Internet of things platform by using different messages. Optionally, the Internet of things platform further sends, to the terminal, information used to request the quantity of reporting times, and then the terminal sends the quantity of reporting times to the Internet of things platform. If the quantity of reporting times is N (N is greater than 1), there may be N data reporting times of the terminal that can be determined by the Internet of things platform in this embodiment. Optionally, there may be one or M time ranges in which the terminal can report data, where M is less than or equal to N. This is not limited in this embodiment.

In some embodiments, the Internet of things platform may update (or modify) the data reporting time of the terminal.

In a possible implementation, a change of the serving cell of the terminal triggers the Internet of things platform to update the data reporting time of the terminal. For example, as shown in FIG. 11, after the serving cell of the terminal changes, the terminal sends a third message to the Internet of things platform, where the third message includes information used to indicate that the serving cell of the terminal changes and information about a changed serving cell. Then, the Internet of things platform obtains historical load of the changed serving cell, determines a new data reporting time based on the historical load of the changed serving cell, and then sends the new data reporting time to the terminal. Then, the terminal reports data to the Internet of things platform based on the new data reporting time.

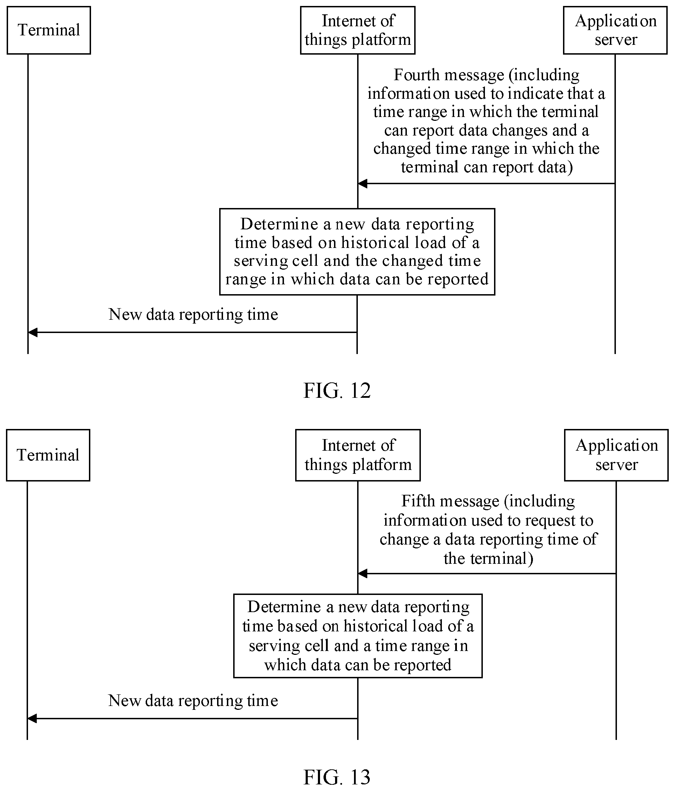

In another possible implementation, a change of the time range in which the terminal can report data triggers the Internet of things platform to update the data reporting time of the terminal. For example, as shown in FIG. 12, after the time range in which the terminal can report data changes, the application server or the terminal (it should be noted that the application server is shown as an example in FIG. 12) sends a fourth message to the Internet of things platform, where the fourth message includes information used to indicate that the time range in which the terminal can report data changes and a changed time range in which data can be reported. Then, the Internet of things platform obtains the historical load of the serving cell (it should be noted that, as time passes by, the currently obtained historical load of the serving cell may be different from the historical load of the serving cell obtained in S201), determines a new data reporting time based on the historical load of the serving cell and a changed time range in which data can be reported, and then sends the new data reporting time to the terminal. Then, the terminal reports data to the Internet of things platform based on the new data reporting time.

In another possible implementation, the application server or the terminal may actively request the Internet of things platform to update the data reporting time of the terminal. For example, as shown in FIG. 13, the application server or the terminal (it should be noted that the application server is shown as an example in FIG. 13) sends a fifth message to the Internet of things platform, where the fifth message includes information used to instruct to change the data reporting time of the terminal. Then, the Internet of things platform obtains the historical load of the serving cell (it should be noted that, as time passes by, the currently obtained historical load of the serving cell may be different from the historical load of the serving cell obtained in S201), determines a new data reporting time based on the historical load of the serving cell and a changed time range in which data can be reported, and then sends the new data reporting time to the terminal. Then, the terminal reports data to the Internet of things platform based on the new data reporting time.

In some embodiments, before executing the solutions in the foregoing embodiments, the Internet of things platform determines that the terminal supports data reporting performed at a data reporting time that is set by the Internet of things platform. In this embodiment, the Internet of things platform executes the solution in any one of the foregoing embodiments only after determining that the terminal supports data reporting performed at the data reporting time that is set by the Internet of things platform. If the Internet of things platform determines that the terminal supports data reporting that is not performed at the data reporting time that is set by the Internet of things platform, the Internet of things platform does not execute the solution in any one of the foregoing embodiments.

Optionally, the terminal further sends third information to the Internet of things platform, where the third information is used to indicate that the terminal can report data at a data reporting time that is set by the Internet of things platform. After receiving the third information, the Internet of things platform determines, based on the third information, that the terminal supports data reporting performed at the data reporting time that is set by the Internet of things platform, and then the Internet of things platform executes the solutions in the foregoing embodiments. In some embodiments, the third information is, for example, a schedule object. Therefore, if the Internet of things platform in this embodiment receives the schedule object sent by the terminal, it can be determined that the terminal supports data reporting performed at the data reporting time that is set by the Internet of things platform.

In some embodiments, a data reporting time field, a reporting period field, a reporting quantity field, a field of the time range in which data can be reported, the reporting quantity field, and a reporting type field in the foregoing embodiments may be carried by using the schedule object. For example, the schedule object includes content shown in the following Table 1.

**Table 1**

| Identifier (ID) | Name (Name) | Operations | Instance (Instances) | Mandatory (Mandatory) | Type (Type) | Range or enumeration (Range or Enumeration) | Units | Description (Description) |
|---|---|---|---|---|---|---|---|---|
| 0 | Data reporting time (Report Time) | | A plurality of (multiple) | Mandatory (Mandatory) | Integer (Integer) | | | Data reporting time (may be an absolute time or a relative time), where there are a plurality of instances for the report time when reporting is performed a plurality of times every day |
| 1 | Reporting period (Report Cycle) | | One (single) | Mandatory (Mandatory) | String (String) | | | Reporting period (0 indicates reporting only once) |
| 2 | Quantity of reporting times (Report Num) | | One (single) | Optional (Optional) | Integer (Integer) | | | Quantity of reporting times every day, which corresponds to the report time, for example, if reporting is performed three times every day, three instances of the report time are required to record the data reporting time |
| 3 | Time range in which data can be reported (Report Tolerance cycle) | | One (single) | Mandatory (Mandatory) | String (String) | | | Time range in which data can be reported, where a current value can be read from a terminal |
| 4 | Reporting type (Report Type) | | One (single) | Mandatory (Mandatory) | Integer (Integer) | | | Reporting type: 0 indicates periodic report, 1 indicates event-triggered (such as, query), and 2 indicates timed registration |

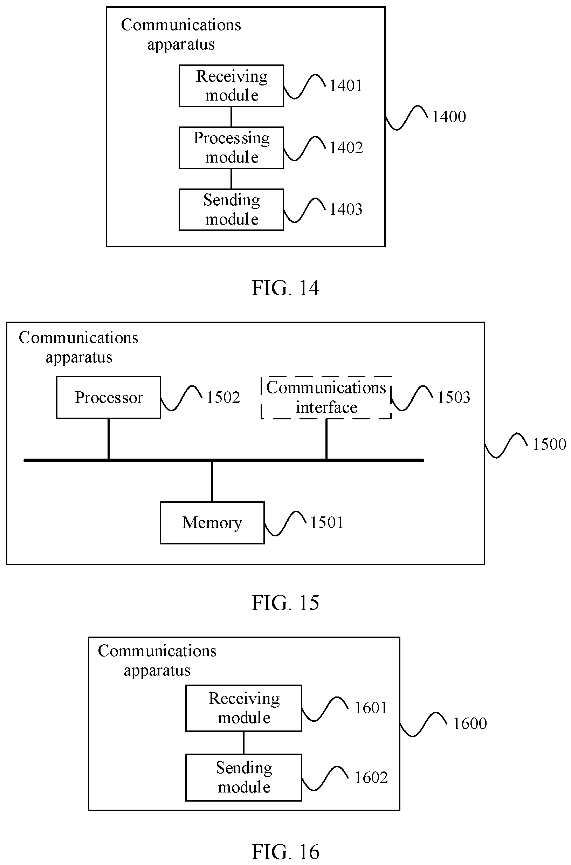

FIG. 14 is a schematic structural diagram of a communications device according to an example not being part of the present invention but useful for understanding the present invention. As shown in FIG. 14, the communications apparatus may be an Internet of things platform, may be a component (for example, an integrated circuit or a chip) of an Internet of things platform, or may be another module, and is configured to implement operations corresponding to the Internet of things platform in any one of the foregoing method embodiments. The communications apparatus 1400 in this example may include a receiving module 1401, a processing module 1402, and a sending module 1403.

The receiving module 1401 is configured to obtain historical load of a serving cell of a terminal.

The processing module 1402 is configured to determine data reporting time of the terminal based on the historical load of the serving cell.

The sending module 1403 is configured to send the data reporting time to the terminal.

In some examples, the processing module 1402 is specifically configured to:
determine predicted load of the serving cell in a preset time period from a current time based on the historical load of the serving cell; and
determine the data reporting time of the terminal based on the predicted load of the serving cell in the preset time period from the current time.

In some examples, the receiving module 1401 is specifically configured to:
obtain historical load of at least one cell, where the at least one cell includes the serving cell of the terminal; and
obtain the historical load of the serving cell from the historical load of the at least one cell based on the serving cell of the terminal.

In some examples, the receiving module 1401 is specifically configured to obtain the historical load of the at least one cell from a network management device.

In some examples, the receiving module 1401 is specifically configured to obtain the historical load of the at least one cell from a base station, where the base station is a serving base station of the terminal, and the at least one cell is a cell within coverage of the base station.

In some examples, the receiving module 1401 is specifically configured to obtain the historical load of the at least one cell from an SCEF.

In some examples, the sending module 1403 is further configured to: send a first message to the SCEF before the receiving module receives identification information that is of the at least one cell and that is sent by the SCEF, where the first message includes information used to request the historical load, the identification information of the at least one cell, and/or identification information of a base station, where
the base station is a serving base station of the terminal, and the at least one cell is a cell within coverage of the base station.

In some examples, the receiving module 1401 is further configured to obtain a time range in which the terminal can report data.

The processing module 1402 is specifically configured to determine the data reporting time of the terminal based on the historical load of the serving cell and the time range in which data can be reported.

In some examples, the receiving module 1401 is specifically configured to receive the time range that is sent by the terminal and in which data can be reported.

In some examples, the sending module 1403 is further configured to send first information to the terminal, where the first information is used to request the time range in which data can be reported.

In some examples, the receiving module 1401 is specifically configured to: receive a time range that is sent by an application server and corresponds to a service type of the terminal and in which data can be reported, and determine, as the time range in which the terminal can report data, the time range that corresponds to the service type of the terminal and in which data can be reported.

In some examples, the receiving module 1401 is further configured to receive first information sent by the application server, where the first information is used to indicate a service type provided by the application server, and the service type provided by the application server is the same as the service type of the terminal.

The processing module 1402 is further configured to determine at least one time range based on the service type provided by the application server and the historical load of the at least one cell.

The sending module 1403 is further configured to send the at least one time range to the application server, where the at least one time range is used by the application server to determine, based on the at least one time range, the time range that corresponds to the service type of the terminal and in which data can be reported.

In some examples, the receiving module 1401 is further configured to receive information that is about the serving cell of the terminal and that is sent by the terminal.

In some examples, the sending module 1403 is further configured to send information used to request to obtain the serving cell of the terminal to the terminal.

In some examples, the receiving module 1401 is further configured to receive a reporting type of the terminal that is sent by the terminal, where the reporting type is used to indicate that a data reporting type of the terminal is periodic reporting or event-triggered reporting.

In some examples, the sending module 1403 is further configured to send information used to request the reporting type of the terminal to the terminal.

In some examples, if the reporting type of the terminal is event-triggered reporting, the receiving module 1401 is further configured to receive a second message sent by the application server, where the second message includes information used to request data reported by the terminal.

In some examples, the processing module 1402 is specifically configured to: after detecting that the terminal is connected to the Internet of things platform, determine the data reporting time of the terminal based on the historical load of the serving cell.

In some examples, the receiving module 1401 is further configured to: after the sending module sends the data reporting time to the terminal, receive a third message sent by the terminal, where the third message includes information used to indicate that the serving cell of the terminal changes and information about the changed serving cell.

The processing module 1402 is further configured to update the data reporting time of the terminal based on historical load of the changed serving cell.

In some examples, the receiving module 1401 is further configured to: after the sending module 1403 sends the data reporting time to the terminal, receive a fourth message sent by the application server or the terminal, where the fourth message includes information used to indicate that the time range in which the terminal can report data changes and the changed time range in which data can be reported.

The processing module 1402 is further configured to update the data reporting time of the terminal based on the historical load of the serving cell and the changed time range in which data can be reported.

In some examples, the receiving module 1401 is further configured to: after the sending module 1403 sends the data reporting time to the terminal, receive a fifth message sent by the application server or the terminal, where the fifth message includes information used to instruct to change the data reporting time of the terminal.

The processing module 1402 is further configured to update the data reporting time of the terminal based on the historical load of the serving cell and the time range in which data can be reported.

In some examples, the processing module 1402 is further configured to: before the Internet of things platform executes any one of the foregoing solutions, determine that the terminal supports data reporting performed by using a data reporting time that is set by the Internet of things platform.

In some examples, the receiving module 1401 is further configured to: before the processing module 1402 determines that the terminal supports data reporting performed by using the data reporting time that is set by the Internet of things platform, receive third information sent by the terminal, where the third information is used to indicate that the terminal can report data at the data reporting time that is set by the Internet of things platform.

The apparatus in this example may be configured to execute the technical solutions of the Internet of things platform the foregoing method examples. Their implementation principles and technical effects are similar, and are not described herein again.

FIG. 15 is a schematic structural diagram of a communications apparatus according to another not being part of the present invention but useful for understanding the present invention. As shown in FIG. 15, the communications apparatus may be an Internet of things platform, may be a component (for example, an integrated circuit or a chip) of an Internet of things, or may be another module, and is configured to implement operations corresponding to the Internet of things platform in any one of the foregoing method examples. The communications apparatus 1500 in this example may include a memory 1501 and a processor 1502. The memory 1501 and the processor 1502 may be connected by using a bus.

The memory 1501 is configured to store program code.

The processor 1502 invokes the program code, and when the program code is executed, is configured to perform the technical solution of the Internet of things platform in any one of the foregoing examples.

Optionally, this example further includes a communications interface 1503. The communications interface 1503 may be connected to the processor 1502 by using a bus. The processor 1502 may control the communications interface 1503 to implement the foregoing receiving and sending functions of the Internet of things platform.

The apparatus in this example may be configured to execute the technical solutions of the Internet of things platform in the foregoing method examples. Their implementation principles and technical effects are similar, and are not described herein again.

FIG. 16 is a schematic structural diagram of a communications apparatus according to another example not being part of the present invention but useful for understanding the present invention. As shown in FIG. 16, the communications apparatus may be a terminal, may be a component (for example, an integrated circuit or a chip) of the terminal, or may be another module, and is configured to implement operations corresponding to the terminal in any one of the foregoing method examples. The communications apparatus 1600 in this example may include a receiving module 1601 and a sending module 1602.

The receiving module 1601 is configured to receive a data reporting time that is of the terminal and that is sent by an Internet of things platform.

The sending module 1602 is configured to report data to the Internet of things platform based on the data reporting time.

In some examples, the sending module is further configured to send, to the Internet of things platform, a time range in which the terminal can report data.

In some examples, the receiving module 1601 is further configured to: before the sending module 1602 sends the time range in which the terminal can report data to the Internet of things platform, receive first information sent by the Internet of things platform, where the first information includes information used to request a time range in which the terminal can report data.

In some examples, the sending module 1602 is further configured to send information about a serving cell of the terminal to the Internet of things platform.

In some examples, the receiving module 1601 is further configured to receive information that is used to request to obtain the serving cell of the terminal and that is sent by the Internet of things platform.

In some examples, the sending module 1602 is further configured to send a reporting type of the terminal to the Internet of things platform, where the reporting type is used to indicate that a data reporting type of the terminal is periodic reporting or event-triggered reporting.

In some examples, the receiving module 1601 is further configured to receive information that is used to request the reporting type of the terminal and that is sent by the Internet of things platform.

In some examples, the receiving module 1601 is further configured to receive updated data reporting time sent by the Internet of things platform.

The sending module 1602 is further configured to report data to the Internet of things platform based on the updated data reporting time.

In some examples, the sending module 1602 is further configured to: send a third message to the Internet of things platform, where the third message includes information used to indicate that the serving cell of the terminal changes and information about the changed serving cell; or
send a fourth message to the Internet of things platform, where the fourth message includes information used to indicate that the time range in which the terminal can report data changes and the changed time range in which data can be reported; or
send a fifth message to the Internet of things platform, where the fifth message includes information used to instruct to change the data reporting time of the terminal.

In some examples, the sending module 1602 is further configured to send third information to the Internet of things platform, where the third information is used to indicate that the terminal can report data at a data reporting time that is set by the Internet of things platform.

The apparatus in this example may be configured to execute the technical solutions of the terminal in the foregoing method examples. Their implementation principles and technical effects are similar, and are not described herein again.

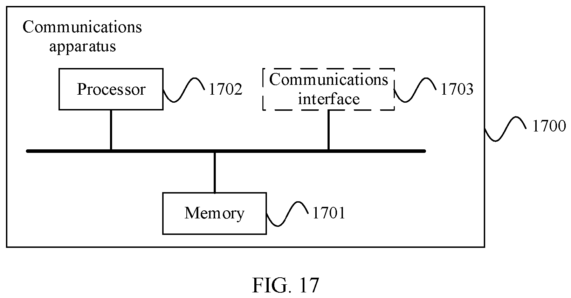

FIG. 17 is a schematic structural diagram of a communications apparatus according to another example not being part of the present invention but useful for understanding the present invention. As shown in FIG. 17, the communications apparatus may be a terminal, may be a component (for example, an integrated circuit or a chip) of a terminal, or may be another module, and is configured to implement operations corresponding to the terminal in any one of the foregoing method examples. The communications apparatus 1700 in this example may include a memory 1701 and a processor 1702. The memory 1701 and the processor 1702 may be connected by using a bus.

The memory 1701 is configured to store program code.

The processor 1702 invokes the program code, and when the program code is executed, is configured to perform the technical solution of the terminal in any one of the foregoing examples.

Optionally, this example further includes a communications interface 1703. The communications interface 1703 may be connected to the processor 1702 by using a bus. The processor 1702 may control the communications interface 1703 to implement the foregoing receiving and sending functions of the terminal.

The apparatus in this example may be configured to execute the technical solutions of the terminal in the foregoing method examples. Their implementation principles and technical effects are similar, and are not described herein again.

It should be noted that, in this example of this application, module division is an example, and is merely logical function division. During actual implementation, another division manner may be used. Functional modules in the examples of this application may be integrated into one processing module, or each of the modules may exist alone physically, or two or more modules are integrated into one module. The integrated module may be implemented in a form of hardware, or may be implemented in a form of a software functional module.

When the integrated module is implemented in the form of a software functional module and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The software product is stored in a storage medium and includes several instructions for instructing a computer device (which may be a personal computer, a server, or a network device) or a processor (processor) to perform all or some of the steps of the methods described in the examples of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk (SSD)), or the like.

## Claims

1. A communication method, comprising:
obtaining, by an Internet of things platform, historical load of a serving cell of a terminal;
obtaining, by the Internet of things platform based on a service type of the terminal, a time range, wherein the time range is used to report data by the terminal;
determining, by the Internet of things platform, a data reporting time of the terminal based on the historical load of the serving cell and the time range; and
sending, by the Internet of things platform to the terminal, the data reporting time.

2. The communication method according to claim 1, wherein the determining, by the Internet of things platform, a data reporting time of the terminal based on the historical load of the serving cell comprises:
determining, by the Internet of things platform, predicted load of the serving cell in a preset time period from a current time based on the historical load of the serving cell; and
determining, by the Internet of things platform, the data reporting time of the terminal based on the predicted load.

3. The communication method according to claim 1 or 2, wherein the obtaining, by an Internet of things platform, historical load of a serving cell of a terminal comprises:
obtaining, by the Internet of things platform, historical load of at least one cell, wherein the at least one cell comprises the serving cell of the terminal; and
obtaining, by the Internet of things platform, the historical load of the serving cell from the historical load of the at least one cell based on the serving cell of the terminal.

4. The communication method according to claim 3, wherein the obtaining, by the Internet of things platform, historical load of at least one cell comprises:
obtaining, by the Internet of things platform, the historical load of the at least one cell from a network management device; or
obtaining, by the Internet of things platform, the historical load of the at least one cell from a base station, wherein the base station is a serving base station of the terminal, and the at least one cell is a cell within coverage of the base station; or
obtaining, by the Internet of things platform, the historical load of the at least one cell from a service capability exposure function (SCEF) network element.

5. The communication method according to claim 4, wherein the obtaining, by the Internet of things platform, the historical load of the at least one cell from an SCEF comprises:
sending, by the Internet of things platform, a first message to the SCEF, wherein the first message comprises information used to request the historical load, identification information of the at least one cell, and/or identification information of a base station, wherein
the base station is a serving base station of the terminal, and the at least one cell is a cell within coverage of the base station;
and
receiving, by the Internet of things platform, the identification information that is of the at least one cell and that is sent by the SCEF.

6. The communication method according to any one of claims 1 to 5, wherein the obtaining, by the Internet of things platform, a time range, wherein the time range is used to report data by the terminal comprises:
receiving, by the Internet of things platform, a time range that is sent by an application server and corresponds to a service type of the terminal, wherein the time range is used to report data by the terminal.

7. The communication method according to claim 6, wherein before the receiving, by the Internet of things platform, a time range that is sent by an application server and corresponds to a service type of the terminal, wherein the time range is used to report data by the terminal, the communication method further comprises:
receiving, by the Internet of things platform, second information sent by the application server, wherein the second information is used to indicate a service type provided by the application server, and the service type provided by the application server is the same as the service type of the terminal;
determining, by the Internet of things platform, at least one time range based on the service type provided by the application server and the historical load of at least one cell; and
sending, by the Internet of things platform, the at least one time range to the application server, wherein the at least one time range is used by the application server to determine, based on the at least one time range, the time range that corresponds to the service type of the terminal, wherein the time range is used to report data by the terminal.

8. The communication method according to any one of claims 1 to 7, further comprising:
receiving, by the Internet of things platform, a reporting type of the terminal that is sent by the terminal, wherein the reporting type is used to indicate that a data reporting type of the terminal is periodic reporting or event-triggered reporting.

9. An Internet of things platform, comprising:
a receiving module (1401), configured to obtain historical load of a serving cell of a terminal and a time range, wherein the time range is used to report data by the terminal;
a processing module (1402), configured to determine data reporting time of the terminal based on the historical load of the serving cell and the time range;
a sending module (1403), configured to send the data reporting time to the terminal.

10. The platform according to claim 9, wherein the processing module (1402) is configured to:
determine predicted load of the serving cell in a preset time period from a current time based on the historical load of the serving cell; and
determine the data reporting time of the terminal based on the predicted load of the serving cell in the preset time period from the current time.

11. The platform according to claim 9 or 10, wherein the receiving module (1401), is configured to obtain historical load of at least one cell, wherein the at least one cell comprises the serving cell of the terminal; and
obtain the historical load of the serving cell from the historical load of the at least one cell based on the serving cell of the terminal.

12. The platform according to claim 11, wherein the receiving module (1401), is configured to obtain the historical load of the at least one cell from a network management device; or
obtain the historical load of the at least one cell from a base station, wherein the base station is a serving base station of the terminal, and the at least one cell is a cell within coverage of the base station; or
obtain the historical load of the at least one cell from a service capability exposure function (SCEF) network element.

13. The platform according to claim 12, wherein the sending module (1403), is configured to send a first message to the SCEF, wherein the first message comprises information used to request the historical load, identification information of the at least one cell, and/or identification information of a base station, wherein
the base station is a serving base station of the terminal, and the at least one cell is a cell within coverage of the base station; and
the receiving module (1401), configured to receive the identification information that is of the at least one cell and that is sent by the SCEF.

14. The platform according to any one of claims 9 to 13, wherein receiving module (1401), configured to:
receive a time range that is sent by an application server and corresponds to a service type of the terminal, wherein the time range is used to report data by the terminal.

15. The platform according to claim 14, wherein before the receiving a time range that is sent by an application server and corresponds to a service type of the terminal, wherein the time range is used to report data by the terminal,
the receiving module (1401), is configured to: receive second information sent by the application server, wherein the second information is used to indicate a service type provided by the application server, and the service type provided by the application server is the same as the service type of the terminal;
the processing module (1402), configured to: determine at least one time range based on the service type provided by the application server and the historical load of at least one cell; and
the sending module (1403), configured to the at least one time range to the application server, wherein the at least one time range is used by the application server to determine, based on the at least one time range, the time range that corresponds to the service type of the terminal, wherein the time range is used to report data by the terminal.

## Patentansprüche

1. Kommunikationsverfahren, umfassend:
Erhalten einer historischen Last einer Serving-Zelle eines Endgeräts durch eine Internet-der-Dinge-Plattform;
Erhalten eines Zeitumfangs durch die Internet-der-Dinge-Plattform auf der Basis von einem Diensttyp des Endgeräts, wobei der Zeitumfang verwendet wird, um Daten durch das Endgerät zu melden;
Bestimmen einer Datenmeldezeit des Endgeräts durch die Internet-der-Dinge-Plattform auf der Basis der historischen Last der Serving-Zelle und des Zeitumfangs; und
Senden der Datenmeldezeit zu dem Endgerät durch die Internet-der-Dinge-Plattform.

2. Kommunikationsverfahren nach Anspruch 1, wobei das Bestimmen einer Datenmeldezeit des Endgeräts durch die Internet-der-Dinge-Plattform auf der Basis der historischen Last der Serving-Zelle Folgendes umfasst:
Bestimmen einer vorhergesagten Last der Serving-Zelle in einem voreingestellten Zeitraum von einer aktuellen Zeit durch die Internet-der-Dinge-Plattform auf der Basis der historischen Last der Serving-Zelle; und
Bestimmen der Datenmeldezeit des Endgeräts durch die Internet-der-Dinge-Plattform auf der Basis der vorhergesagten Last.

3. Kommunikationsverfahren nach Anspruch 1 oder 2, wobei das Erhalten einer historischen Last einer Serving-Zelle eines Endgeräts durch eine Internet-der-Dinge-Plattform Folgendes umfasst:
Erhalten einer historischen Last mindestens einer Zelle durch die Internet-der-Dinge-Plattform, wobei die mindestens eine Zelle die Serving-Zelle des Endgeräts umfasst; und
Erhalten der historischen Last der Serving-Zelle durch die Internet-der-Dinge-Plattform aus der historischen Last der mindestens einen Zelle auf der Basis der Serving-Zelle des Endgeräts.

4. Kommunikationsverfahren nach Anspruch 3, wobei das Erhalten einer historischen Last mindestens einer Zelle durch die Internet-der-Dinge-Plattform Folgendes umfasst:
Erhalten der historischen Last der mindestens einen Zelle durch die Internet-der-Dinge-Plattform von einer Netzwerkverwaltungsvorrichtung; oder
Erhalten der historischen Last der mindestens einen Zelle durch die Internet-der-Dinge-Plattform von einer Basisstation, wobei die Basisstation eine Serving-Basisstation des Endgeräts ist und die mindestens eine Zelle eine Zelle innerhalb der Abdeckung der Basisstation ist; oder
Erhalten der historischen Last der mindestens einen Zelle durch die Internet-der-Dinge-Plattform von einem "Service Capability Exposure Function"- bzw. SCEF-Netzwerkelement.

5. Kommunikationsverfahren nach Anspruch 4, wobei das Erhalten der historischen Last der mindestens einen Zelle durch die Internet-der-Dinge-Plattform von einer SCEF Folgendes umfasst:
Senden einer ersten Nachricht zu der SCEF durch die Internet-der-Dinge-Plattform, wobei die erste Nachricht Informationen, die verwendet werden, um die historische Last anzufordern, Identifikationsinformationen der mindestens einen Zelle und/oder Identifikationsinformationen einer Basisstation umfasst, wobei
die Basisstation eine Serving-Basisstation des Endgeräts ist und die mindestens eine Zelle eine Zelle innerhalb der Abdeckung der Basisstation ist; und
Empfangen der Identifikationsinformationen, die von der mindestens einen Zelle sind und die von der SCEF gesendet werden, durch die Internet-der-Dinge-Plattform.

6. Kommunikationsverfahren nach einem der Ansprüche 1 bis 5, wobei das Erhalten eines Zeitumfangs durch die Internet-der-Dinge-Plattform, wobei der Zeitumfang verwendet wird, um Daten durch das Endgerät zu melden, Folgendes umfasst:
Empfangen eines Zeitumfangs, der von einem Anwendungsserver gesendet wird und einem Diensttyp des Endgeräts entspricht, durch die Internet-der-Dinge-Plattform, wobei der Zeitumfang verwendet wird, um Daten durch das Endgerät zu melden.

7. Kommunikationsverfahren nach Anspruch 6, wobei das Kommunikationsverfahren vor dem Empfangen eines Zeitumfangs, der durch einen Anwendungsserver gesendet wird und einem Diensttyp des Endgeräts entspricht, wobei der Zeitumfang verwendet wird, um Daten durch das Endgerät zu melden, durch die Internet-der-Dinge-Plattform ferner Folgendes umfasst:
Empfangen von zweiten Informationen, die durch den Anwendungsserver gesendet werden, durch die Internet-der-Dinge-Plattform, wobei die zweiten Informationen verwendet werden, um einen durch den Anwendungsserver bereitgestellten Diensttyp anzugeben, und der durch den Anwendungsserver bereitgestellte Diensttyp der gleiche ist wie der Diensttyp des Endgeräts;
Bestimmen mindestens eines Zeitumfangs durch die Internet-der-Dinge-Plattform auf der Basis des durch den Anwendungsserver bereitgestellten Diensttyps und der historischen Last mindestens einer Zelle; und
Senden des mindestens einen Zeitumfangs zu dem Anwendungsserver durch die Internet-der-Dinge-Plattform, wobei der mindestens eine Zeitumfang durch den Anwendungsserver verwendet wird, um auf der Basis des mindestens einen Zeitumfangs den Zeitumfang zu bestimmen, der dem Diensttyp des Endgeräts entspricht, wobei der Zeitumfang verwendet wird, um Daten durch das Endgerät zu melden.

8. Kommunikationsverfahren nach einem der Ansprüche 1 bis 7, ferner umfassend:
Empfangen eines Berichttyps des Endgeräts, der durch das Endgerät gesendet wird, durch die Internet-der-Dinge-Plattform, wobei der Berichttyp verwendet wird, um anzugeben, dass ein Datenmeldetyp des Endgeräts periodisches Melden oder ereignisausgelöstes Melden ist.

9. Internet-der-Dinge-Plattform, umfassend:
ein Empfangsmodul (1401), ausgelegt zum Erhalten einer historischen Last einer Serving-Zelle eines Endgeräts und eines Zeitumfangs, wobei der Zeitumfang verwendet wird, um Daten durch das Endgerät zu melden;
ein Verarbeitungsmodul (1402), ausgelegt zum Bestimmen einer Datenmeldezeit des Endgeräts auf der Basis der historischen Last der Serving-Zelle und des Zeitumfangs;
ein Sendemodul (1403), ausgelegt zum Senden der Datenmeldezeit zu dem Endgerät.

10. Plattform nach Anspruch 9, wobei das Verarbeitungsmodul (1402) ausgelegt ist zum
Bestimmen einer vorhergesagten Last der Serving-Zelle in einem voreingestellten Zeitraum von einer aktuellen Zeit auf der Basis der historischen Last der Serving-Zelle; und
Bestimmen der Datenmeldezeit des Endgeräts auf der Basis der vorhergesagten Last der Serving-Zelle in dem voreingestellten Zeitraum von der aktuellen Zeit.

11. Plattform nach Anspruch 9 oder 10, wobei das Empfangsmodul (1401) ausgelegt ist zum Erhalten einer historischen Last mindestens einer Zelle, wobei die mindestens eine Zelle die Serving-Zelle des Endgeräts umfasst; und
Erhalten der historischen Last der Serving-Zelle aus der historischen Last der mindestens einen Zelle auf der Basis der Serving-Zelle des Endgeräts.

12. Plattform nach Anspruch 11, wobei das Empfangsmodul (1401) ausgelegt ist zum Erhalten der historischen Last der mindestens einen Zelle von einer Netzwerkverwaltungsvorrichtung; oder
Erhalten der historischen Last der mindestens einen Zelle von einer Basisstation, wobei die Basisstation eine Serving-Basisstation des Endgeräts ist und die mindestens eine Zelle eine Zelle innerhalb der Abdeckung der Basisstation ist; oder
Erhalten der historischen Last der mindestens einen Zelle von einem "Service Capability Exposure Function"- bzw. SCEF-Netzwerkelement.

13. Plattform nach Anspruch 12, wobei das Sendemodul (1403) ausgelegt ist zum Senden einer ersten Nachricht zu der SCEF, wobei die erste Nachricht Informationen, die verwendet werden, um die historische Last anzufordern, Identifikationsinformationen der mindestens einen Zelle und/oder Identifikationsinformationen einer Basisstation umfasst, wobei
die Basisstation eine Serving-Basisstation des Endgeräts ist und die mindestens eine Zelle eine Zelle innerhalb der Abdeckung der Basisstation ist; und
das Empfangsmodul (1401) ausgelegt ist zum Empfangen der Identifikationsinformationen, die von der mindestens einen Zelle sind durch die SCEF gesendet werden.

14. Plattform nach einem der Ansprüche 9 bis 13, wobei das Empfangsmodul (1401) ausgelegt ist zum
Empfangen eines Zeitumfangs, der durch einen Anwendungsserver gesendet wird und einem Diensttyp des Endgeräts entspricht, wobei der Zeitumfang verwendet wird, um Daten durch das Endgerät zu melden.

15. Plattform nach Anspruch 14, wobei vor dem Empfangen eines Zeitumfangs, der durch einen Anwendungsserver gesendet wird und einem Diensttyp des Endgeräts entspricht, wobei der Zeitumfang verwendet wird, um Daten durch das Endgerät zu melden,
das Empfangsmodul (1401) ausgelegt ist zum Empfangen von zweiten Informationen, die durch den Anwendungsserver gesendet werden, wobei die zweiten Informationen verwendet werden, um einen durch den Anwendungsserver bereitgestellten Diensttyp anzugeben, und der durch den Anwendungsserver bereitgestellte Diensttyp der gleiche ist wie der Diensttyp des Endgeräts;
das Verarbeitungsmodul (1402), ausgelegt zum Bestimmen mindestens eines Zeitumfangs auf der Basis des durch den Anwendungsserver bereitgestellten Diensttyps und der historischen Last mindestens einer Zelle; und
das Sendemodul (1403), ausgelegt zum des mindestens einen Zeitumfangs zu dem Anwendungsserver, wobei der mindestens eine Zeitumfang durch den Anwendungsserver verwendet wird, um auf der Basis des mindestens einen Zeitumfangs den Zeitumfang zu bestimmen, der dem Diensttyp des Endgeräts entspricht, wobei der Zeitumfang verwendet wird, um Daten durch das Endgerät zu melden.

## Revendications

1. Procédé de communication, comprenant :
l'obtention par une plate-forme de l'Internet des objets d'une charge historique d'une cellule de desserte d'un terminal ;
l'obtention, par la plate-forme de l'Internet des objets basée sur un type de service du terminal, d'une plage temporelle, la plage temporelle étant utilisée pour rapporter des données par le terminal ;
la détermination, par la plate-forme de l'Internet des objets, d'un temps de rapport de données du terminal sur la base de la charge historique de la cellule de desserte et de la plage temporelle ; et
l'envoi, par la plate-forme de l'Internet des objets au terminal, du temps de rapport de données.

2. Procédé de communication selon la revendication 1, la détermination, par la plate-forme de l'Internet des objets, d'un temps de rapport de données du terminal sur la base de la charge historique de la cellule de desserte comprenant :
la détermination, par la plate-forme de l'Internet des objets, de la charge prédite de la cellule de desserte dans une période de temps prédéterminée à partir d'un temps courant sur la base de la charge historique de la cellule de desserte ; et
la détermination, par la plate-forme de l'Internet des objets, du temps de rapport de données du terminal sur la base de la charge prévue.

3. Procédé de communication selon la revendication 1 ou 2, l'obtention, par une plate-forme de l'Internet des objets, d'une charge historique d'une cellule de desserte d'un terminal comprenant :
l'obtention, par la plate-forme de l'Internet des objets, d'une charge historique d'au moins une cellule, l'au moins une cellule comprenant la cellule de desserte du terminal ; et
l'obtention, par la plate-forme de l'Internet des objets, de la charge historique de la cellule de desserte à partir de la charge historique de l'au moins une cellule sur la base de la cellule de desserte du terminal.

4. Procédé de communication selon la revendication 3, l'obtention, par la plate-forme de l'Internet des objets, d'une charge historique d'au moins une cellule comprenant :
l'obtention, par la plate-forme de l'Internet des objets, de la charge historique de l'au moins une cellule à partir d'un dispositif de gestion de réseau ; ou
l'obtention, par la plate-forme de l'Internet des objets, de la charge historique de l'au moins une cellule à partir d'une station de base, la station de base étant une station de base de desserte du terminal, et l'au moins une cellule étant une cellule dans la couverture de la station de base ; ou
l'obtention, par la plate-forme de l'Internet des objets, de la charge historique de l'au moins une cellule à partir d'un élément de réseau à fonction d'exposition de capacité de service (SCEF).

5. Procédé de communication selon la revendication 4, l'obtention, par la plate-forme de l'Internet des objets, de la charge historique de l'au moins une cellule en provenance d'une SCEF comprenant :
l'envoi, par la plate-forme de l'Internet des objets, d'un premier message à la SCEF, le premier message comprenant des informations utilisées pour demander la charge historique, des informations d'identification de l'au moins une cellule, et/ou des informations d'identification d'une station de base
la station de base étant une station de base de desserte du terminal, et l'au moins une cellule étant une cellule dans la couverture de la station de base ; et
la réception, par la plate-forme de l'Internet des objets, des informations d'identification qui sont de l'au moins une cellule et qui sont envoyées par la SCEF.

6. Procédé de communication selon l'une quelconque des revendications 1 à 5, l'obtention, par la plate-forme de l'Internet des objets, d'une plage temporelle, la plage temporelle étant utilisée pour rapporter des données par le terminal comprenant :
la réception, par la plate-forme de l'Internet des objets, d'une plage temporelle qui est envoyée par un serveur d'application et correspond à un type de service du terminal, la plage temporelle étant utilisée pour rapporter des données par le terminal.

7. Procédé de communication selon la revendication 6, avant la réception, par la plate-forme de l'Internet des objets, d'une plage temporelle qui est envoyée par un serveur d'application et correspond à un type de service du terminal, la plage temporelle étant utilisée pour rapporter des données par le terminal, le procédé de communication comprenant en outre :
la réception, par la plate-forme de l'Internet des objets, de deuxièmes informations envoyées par le serveur d'application, les deuxièmes informations étant utilisées pour indiquer un type de service fourni par le serveur d'application et le type de service fourni par le serveur d'application étant le même que le type de service du terminal ;
la détermination, par la plate-forme de l'Internet des objets, d'au moins une plage temporelle sur la base du type de service fourni par le serveur d'application et de la charge historique d'au moins une cellule ; et
l'envoi, par la plate-forme de l'Internet des objets, de l'au moins une plage temporelle au serveur d'application, l'au moins une plage temporelle étant utilisée par le serveur d'application pour déterminer, sur la base de l'au moins une plage temporelle, la plage temporelle qui correspond au type de service du terminal, la plage temporelle étant utilisée pour rapporter des données par le terminal.

8. Procédé de communication selon l'une quelconque des revendications 1 à 7, comprenant en outre :
la réception, par la plate-forme de l'Internet des objets, d'un type de rapport du terminal qui est envoyé par le terminal, le type de rapport étant utilisé pour indiquer qu'un type de rapport de données du terminal est un rapport périodique ou un rapport déclenché par un événement.

9. Plate-forme de l'Internet des objets, comprenant :
un module de réception (1401), configuré pour obtenir une charge historique d'une cellule de desserte d'un terminal et une plage temporelle, la plage temporelle étant utilisée pour rapporter des données par le terminal ;
un module de traitement (1402), configuré pour déterminer le temps de rapport de données du terminal sur la base de la charge historique de la cellule de desserte et de la plage temporelle ;
un module d'envoi (1403), configuré pour envoyer le temps de rapport de données au terminal.

10. Plate-forme selon la revendication 9, le module de traitement (1402) étant configuré pour :
déterminer la charge prédite de la cellule de desserte dans une période de temps prédéterminée à partir d'un temps courant sur la base de la charge historique de la cellule de desserte ; et
déterminer le temps de rapport de données du terminal sur la base de la charge prévue de la cellule de desserte dans la période de temps prédéfinie à partir du temps courant.

11. Plate-forme selon la revendication 9 ou 10, le module de réception (1401) étant configuré pour obtenir une charge historique d'au moins une cellule, l'au moins une cellule comprenant la cellule de desserte du terminal ; et
obtenir la charge historique de la cellule de desserte à partir de la charge historique de l'au moins une cellule sur la base de la cellule de desserte du terminal.

12. Plate-forme selon la revendication 11, le module de réception (1401) étant configuré pour obtenir la charge historique de l'au moins une cellule à partir d'un dispositif de gestion de réseau ; ou
obtenir la charge historique de l'au moins une cellule à partir d'une station de base, la station de base étant une station de base de desserte du terminal, et l'au moins une cellule étant une cellule dans la couverture de la station de base ; ou
obtenir la charge historique de l'au moins une cellule à partir d'un élément de réseau à fonction d'exposition de capacité de service (SCEF).

13. Plate-forme selon la revendication 12, le module d'envoi (1403) étant configuré pour envoyer un premier message à la SCEF, le premier message comprenant des informations utilisées pour demander la charge historique, des informations d'identification de l'au moins une cellule, et/ou des informations d'identification d'une station de base,
la station de base étant une station de base de desserte du terminal, et l'au moins une cellule étant une cellule dans la couverture de la station de base ; et
le module de réception (1401), configuré pour recevoir les informations d'identification qui sont de l'au moins une cellule et qui sont envoyées par la SCEF.

14. Plate-forme selon l'une quelconque des revendications 9 à 13, le module de réception (1401) étant configuré pour :
recevoir une plage temporelle qui est envoyée par un serveur d'application et correspond à un type de service du terminal, la plage temporelle étant utilisée pour rapporter des données par le terminal.

15. Plate-forme selon la revendication 14, avant la réception, d'une plage temporelle qui est envoyée par un serveur d'application et correspond à un type de service du terminal, la plage temporelle étant utilisée pour rapporter des données par le terminal,
le module de réception (1401) étant configuré pour : recevoir des deuxièmes informations envoyées par le serveur d'application, les deuxièmes informations étant utilisées pour indiquer un type de service fourni par le serveur d'application, et le type de service fourni par le serveur d'application étant le même que le type de service du terminal ;
le module de traitement (1402), étant configuré pour : déterminer au moins une plage temporelle sur la base du type de service fourni par le serveur d'application et de la charge historique d'au moins une cellule ; et
le module d'envoi (1403), étant configuré pour l'au moins une plage temporelle vers le serveur d'application, l'au moins une plage temporelle étant utilisé par le serveur d'application pour déterminer, sur la base de l'au moins une plage temporelle, la plage temporelle qui correspond au type de service du terminal, la plage temporelle étant utilisée pour rapporter des données par le terminal.
